# EUROPEAN PATENT APPLICATION

(11) **EP 0 972 573 A1**
(43) Date of publication of application: **19.01.2000**
(21) Application number: 98113188.1
(22) Date of filing: 15.07.1998
(51) Int. Cl.: B04C 5/13, B04C 5/103

(54) **Cyclone separator and strainer for the same**

(71) Applicant: Human net Kabushiki-Kaisya, Kawaguchi-Si, Saitama-Ken (JP); Sanyo S.P Kabushiki Kaisya, Tokyo (JP)
(72) Inventor: Nagano, Hiroshi, Tokyo (JP)
(74) Representative: Finck, Dieter, Dr.Ing.

(57) **Abstract**

There is disclosed a cyclone separator comprising a cylindrical portion (2) of a cyclone and a strainer (S) vertically disposed on an upper center of the cylindrical portion (2), the strainer (S) being formed by shielding a lower end portion of the cylindrical portion having a through hole (9) formed all the way through a peripheral wall and adapted to disperse particles contained in a fluid flowing towards the hole (9) of the strainer (S) among circulating fluid currents (13) generated at the cylindrical portion (2) in a centrifugal direction. A strainer (S) for the cyclone separator is also disclosed.

## Description

### BACKGROUND OF THE INVENTION

This invention relates to a cyclone separator and a strainer for the same.

Generally, a cyclone separator, as shown in a cyclone dust collector of Fig. 14, comprises a vertical cylindrical portion 51, and a vertical conical portion 52 concentrically connected to a lower end portion thereof, an inlet tube 53 formed in a peripheral wall of the cylindrical portion in a tangential direction being formed of a container having a discharge tube 58 and a discharge port 54 at a central upper portion of the cylindrical portion 51 and at a lower end apex of the conical portion 52. When a gas containing solid particles flows into the cylindrical portion in a tangential direction from the inlet tube 53, a circulating air current 56 is generated therein by that power and the solid particles are precipitated towards an inner wall surface under the effect of a centrifugal force. Then, the solid particles are lowered along the inner wall surface and received in a dust box 55 from the lower discharge port 54. A gas, from which the particles have been removed, is discharged from the discharge tube 58 at the central upper portion of the cylindrical portion 51.

In the conventional cyclone dust collector, since the discharge tube 58 is opened at the lower end portion and the conical portion 52 has a hollow interior, it sometimes happens depending on an amount of the incoming air current or wind velocity that the circulating air current 56 generated within the cylindrical portion 51 is once lowered along the peripheral wall of the conical portion 52 and then a tornado-like ascending air current is generated at the center of the conical portion 52. The ascending air current thus generated is discharged from the discharge tube 53 at the center of the upper surface of the cylindrical portion 51. At that time, the solid particles precipitated on a lower part of the conical portion 52, especially fine particles having a small specific gravity, are drawn and partly raised by the tornado-like ascending air current 57 and flown out of the discharge tube 58.

Since the conventional cyclone separator is, as mentioned above, so simple in structure that the discharge tube 58 at the central upper portion of the cylindrical portion 51 is opened at the lower end portion and the conical portion 52 has a hollow interior, the solid particles, which can be captured, are about 10 microns at the smallest. Those particles having smaller diameter than them are low in separation factor from gas or liquid. A capturing factor of solid particles of 5 microns or less is about 70% at the most. In case of a large-sized cyclone, since the effect of centrifugal force is small and the capturing factor of the fine particles is degraded, it is necessary to employ a plurality of small-sized cyclone in multiple stages in order to increase the capturing factor using small-sized cyclones, so that a pressure loss can be reduced. Even in that event, it is difficult to increase the capturing factor exceeding 90 % for fine particles. For this reason, conventionally, there is a necessity of a provision of a remover for chemically removing the solid particles remained in the discharged fluid at a later stage of the discharge tube. Therefore, the installation cost and the chemical cost such as solvent are increased. The present invention has been accomplished in view of the above situation.

### SUMMARY OF THE INVENTION

It is, therefore, an object of the present invention to provide an improved cyclone separator and a strainer for such a cyclone separator in which an ideal capturing factor can be obtained with a unitary cyclone.

In order to achieve the above object, according to the present invention, there is essentially provided a cyclone separator comprising a cylindrical portion of a cyclone and a strainer vertically disposed on an upper center of the cylindrical portion, the strainer being formed by shielding a lower end portion of the cylindrical portion having a through hole formed all the way through a peripheral wall and adapted to disperse particles contained in a fluid flowing towards the holes of the strainer among circulating fluid currents generated at the cylindrical portion in a centrifugal direction.

Owing to the above arrangement, when the solid particles dispersed in the fluid are flowed into the cylindrical portion of the cyclone from the inlet port in a tangential direction, a circulating fluid current is generated therein by that power. Of all the solid particles, those particles having a comparatively large diameter are precipitated towards an outer wall under the effect of a centrifugal force and lowered along the device wall. However, the particles having a comparatively small diameter are proceeded towards the holes while circulating around the strainer together with the circulating fluid current. The fluid is abruptly curved towards the holes from the peripheral surface of the cylindrical member and passed through the holes. At that time, since the particles cannot be abruptly curved towards the holes under the effect of the centrifugal force, they are proceeded in the centrifugal direction. For this reason, they are carried again by the circulating current and precipitated along the device body.

Since the lower end portion of the strainer is shielded, a strong tornado phenomenon is effectively prevented from occurring at the center of the conical portion. Accordingly, the factor for capturing the particles is increased.

It is preferred that the lower end portion of the strainer is shielded with a disc and the diameter of the disc is larger than the cylindrical member, so that a gap formed between a peripheral edge of the disc and the device wall is reduced.

Owing to this feature, the particles can easily be precipitated from the circulating fluid current lowered to the conical portion from the gap and the fine particles raised by a weak tornado phenomenon readily occurred to the center of the conical portion are lead again to the conical portion by the fluid current lowered to the conical portion from the gap and not allowed to flow out towards the cylindrical portion side. Accordingly, the capturing factor is further increased.

In case a precision filter is employed in the strainer, even in case the diameter of non-captured particles is 1 micron or less, about a 100 % capture can be realized. In case two small-sized cyclones are employed, a lower end of the first cyclone is joined to an upper portion of the second cyclone so that the fluid is returned again to the upper portion of the first cyclone. By doing so, a double working can be performed and the particles can be captured in a more reliable manner.

A strainer for a cyclone separator according to the present invention is characterized in that a lower end portion of a cylindrical member having a plurality of through holes in a peripheral surface thereof is shielded with a disc having a larger diameter than the cylindrical member.

Owing to the above feature, simply by joining the above strainer to a lower end portion of the upper discharge tube of the conventional cyclone separator, the capturing factor of the cyclone separator can be remarkably increased.

The strainer may be designed such that a lower end of the cylindrical member having vertical slits and slits and baffle boards alternately arranged on a peripheral surface in a circumferential direction is shielded by a disc having a larger diameter than the cylindrical member and the baffle boards are each formed in such an arcuate shape in section that it exhibits a convex surface and slanted in a centrifugal direction.

By virtue of the above arrangement, the particles contained in the current circulating around the nearby of the peripheral surface of the strainer are effectively reflected in the centrifugal direction by the baffle boards. Such a strainer can be obtained easily and in an economical manner.

The strainer may also be designed such that a part of a peripheral wall of the cylindrical member is equally spacedly cut out in a circumferential direction to form the vertical slits and the remaining peripheral wall is twisted by a predetermined angle in a predetermined direction about a vertical axis to form the baffle boards.

Owing to the above arrangement, strainers can be manufactured on a mass production basis and in an economical manner. Moreover, by forming the through holes only in the vicinity of the disc of the strainer, those particles having a comparatively large diameter are prevented from hitting directly the through holes.

### BRIEF DESCRIPTION OF THE DRAWINGS

A more complete application of the invention and many of the attendant advantages thereof will be readily obtained as the same becomes better understood by reference to the following detailed description when considered in connection with the accompanying drawings, wherein:
- Fig. 1: is a sectional view of one example of a cyclone dust collector according to the present invention;
- Fig. 2: is a plan view;
- Fig. 3: is a front view of one example of a strainer according to the present invention;
- Fig. 4: is a sectional view taken on line A-A of Fig. 3;
- Fig. 5: is an explanatory view showing one example of a method of manufacturing a strainer;
- Fig. 6: is an enlarged sectional view of a main portion for explaining the operation of a baffle board;
- Fig. 7: is an enlarged sectional view of a main portion showing other examples of a construction and operation of the baffle board;
- Fig. 8: is a perspective view showing another example of the holes of the strainer;
- Fig. 9: is a sectional view showing still another example of the strainer;
- Fig. 10: is a sectional view showing another embodiment of the present invention;
- Fig. 11: is a cross-sectional view of an upper portion of a first cyclone;
- Fig. 12: is likewise a cross-sectional view of a lower portion;

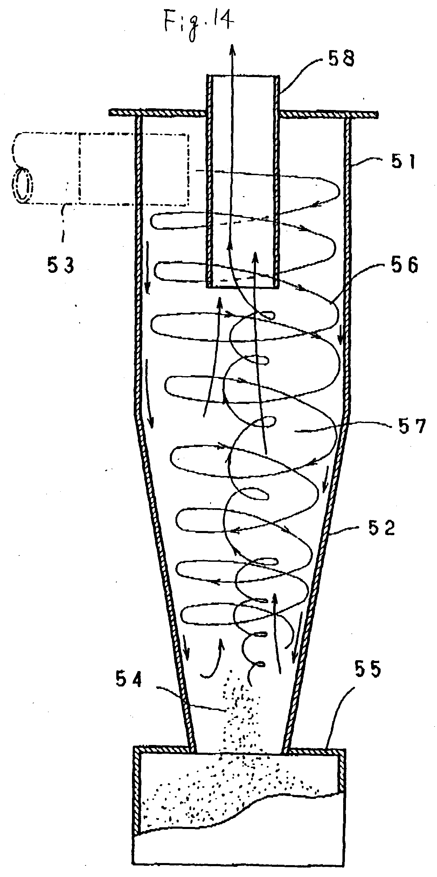

- Fig. 13: is a partly sectional view of a portion showing an attachment state of another strainer; and
- Fig. 14: is a sectional view of a cyclone dust collector according to the prior art.

### DETAILED DESCRIPTION OF THE EMBODIMENTS

Embodiments of the present invention will now be described with reference to the accompanying drawings.

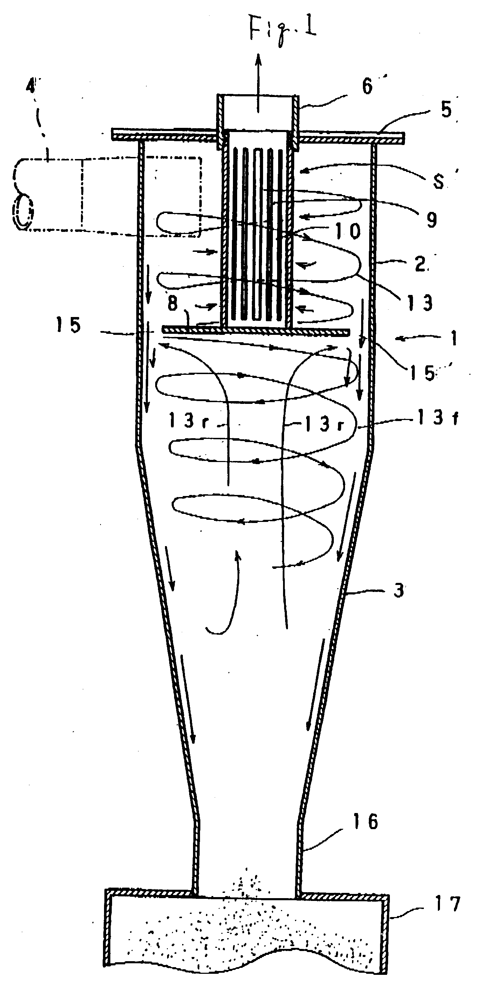

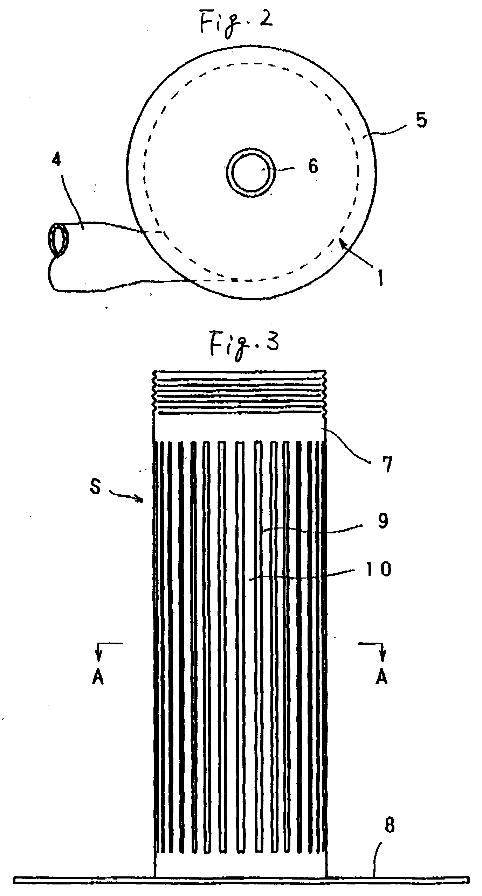

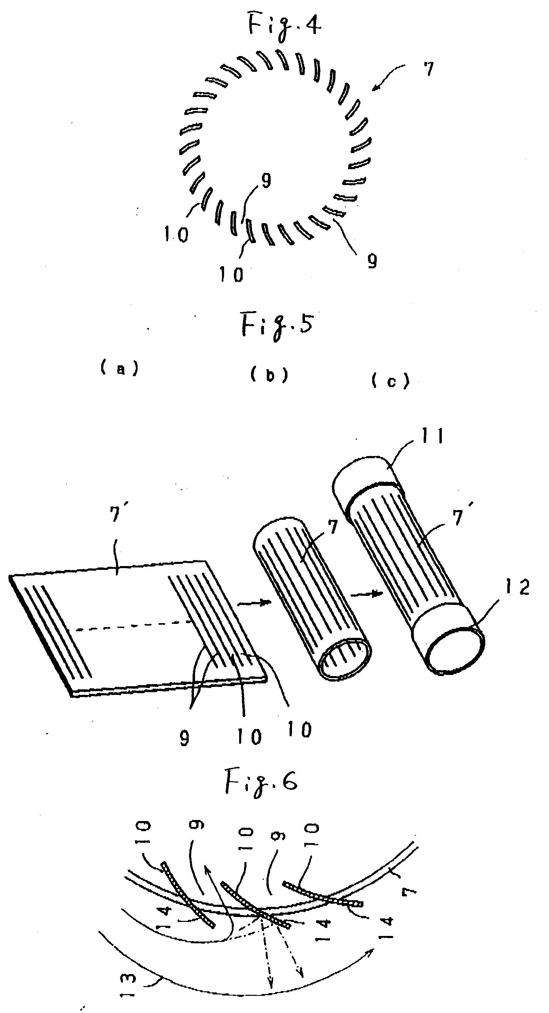

Fig. 1 is a vertical sectional view of one example of a cyclone separator according to the present invention, Fig. 2 is likewise a plan view, Fig. 3 is a front view of one example of a strainer according to the present invention, and Fig. 4 is a sectional view taken on line A-A of Fig. 4.

Reference numeral 1 denotes a cyclone body, which is formed by connecting an upper end portion of a conical portion 3 to a lower end portion of a cylindrical portion 2. An inlet tube 4 for flowing a fluid containing solid particles therein is connected to the cylindrical portion 2 in a tangential direction. A discharge tube 6 extending from a central portion of the cylindrical portion to outside a lid 5 for closing an upper surface of the cylindrical portion 2 is formed in the lid 5.

Reference character S denotes a strainer newly provided in accordance with the present invention. The strainer S includes a cylindrical member 7 and a disc 8 for shielding a lower end portion of the cylindrical member. A plurality of holes 9 are formed in a peripheral wall of the cylindrical member 7. The shape of the holes 9 is not particularly limited. In the example of Fig. 1, the strainer S is manufactured such that, as shown in Figs. 3 and 4, a part of the peripheral wall of the cylindrical member 7 is equally spacedly cut out in a circumferential direction to form the vertical slits 9 and the remaining peripheral wall is twisted by a predetermined angle in a predetermined direction about a vertical axis to form the baffle boards 10. However, the manufacturing method is not particularly limited. For example, as exemplified in Fig. 5, it is accepted that (a) holes 9 and baffle boards 10 are alternately formed in a rectangular planar plate 7' by press-working, then (b) the resultant is rounded to form a cylindrical member and then (c) short cylindrical members 11,12 are connected to an upper and a lower part of the cylindrical members, respectively, by welding or engagement.

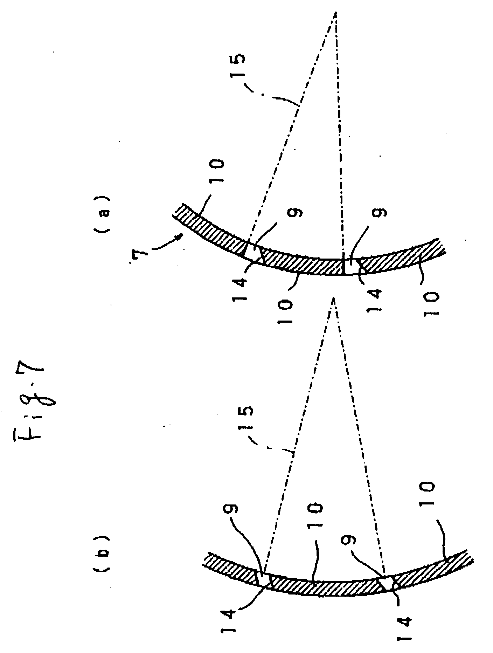

The baffle boards 10 are to be twisted in a downstream direction with respect to the circulating fluid current generated on the outer periphery of the strainer. By doing so, each of the baffle boards 10 of the strainer S acts as a reflective plane 14 for reflecting the particles contained in the fluid current 13' proceeding towards the holes 9 (of all the circulating fluid currents 13 generated by being flown into the cylindrical member 2 in the tangential direction from the inlet tube 4) while circulating around the nearby area of the strainer S, towards the device wall, i.e., in the centrifugal direction, as shown in Fig. 6. In case the strainer S is designed such that as mentioned above, the holes are formed in the peripheral wall of the cylindrical members and baffle boards 10 are formed by twisting the remaining peripheral wall, the entire outer surfaces of the baffle boards 10 each act as a reflecting plane. Accordingly, the effect expected by the present invention can be most effectively exhibited.

However, in case the particles to be separated from the fluid are comparatively large in diameter or specific gravity, the effect for separating the particles from the fluid can be obtained merely by forming the radially extending slit-like holes in the cylindrical member 7 and without a need of twisting the remaining peripheral wall. In case the particles are not very large in diameter or specific gravity, there is a possibility in some cases that an intended effect can be obtained nevertheless the area of the reflecting plane 14 formed on the remaining peripheral wall is small. In such cases, as exemplified in Fig. 7(a), the reflecting plane 14 may be formed on the upstream side end portion of the circulating fluid of the baffle boards 10 formed by the remaining peripheral wall of the cylindrical member 7, i.e., a downstream side end portion of the holes 9, by chamfering the end portion so as to be slantwise confronted with the circulating fluid current 13. In this case, there is no need of twisting the remaining peripheral wall of the cylindrical member.

As shown in Fig. 7(b), in case the holes 9 formed in the cylindrical member 7 are slanted in a downstream direction of the circulating fluid with respect to radiating lines 15, an increased effect for separating the particles contained in the fluid current 13' proceeding towards the holes 9 can be obtained.

In the embodiments described hereinbefore, vertical slit-like holes are formed in the cylindrical member 7. Instead of the vertical slits, other shapes such as triangle, rectangle, oblong, circle or the like may be provided to the holes. Even in that arrangement, a remarkably higher capturing factor can be obtained than in the conventional device.

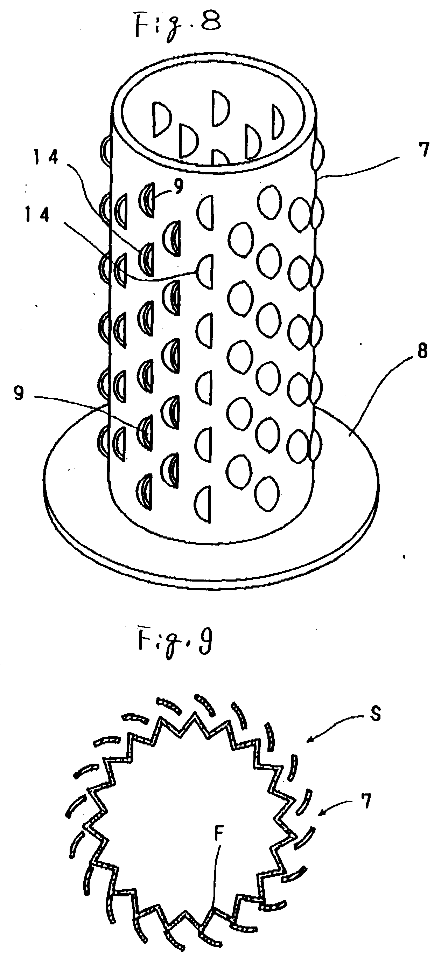

Fig. 8 shows an example in which a part of the peripheral wall of the cylindrical member 7 is outwardly semi-circularly embossed along the diameter line so that reflecting planes 14 slanted in the downstream direction of the circulating fluid from the outer peripheral surface and through holes 9 extending in the same direction are formed.

In a preferred embodiment of the present invention, the disc 8 for closing a lower end portion of the strainer S has a larger diameter than the cylindrical member 7 and a peripheral edge thereof is proximate to an inner wall surface of the cylindrical portion 2 or conical portion 3, so that a small gap 15 is formed between the peripheral edge of the disc 8 and the device wall.

A dust box 17 is detachably attached to the discharge port 16 formed at a lower end portion of the conical portion 3.

Operation of the strainer having the construction of Figs. 3, 4 and 6 will now be described.

When a fluid current containing solid particles are flown into the cylindrical portion 1 in the tangential direction from the inlet tube 4, a circulating fluid current is 13 generated within the cyclone dust collector and those particles having a large diameter or specific gravity are precipitated along the device wall under the effect of the centrifugal force and deposited in the conical portion 3 through the gap 15 between the disc 8 on the lower end portion of the strainer S and the device wall. On the other hand, the particles having a significantly small specific gravity or diameter contained in the circulating fluid current generated upwardly of the disc 8 are proceeded towards the slit-like holes 9 while circulating around a nearby area of the peripheral surface of the strainer S together with the fluid current. The fluid is abruptly curved towards the slits 9 from a nearby area around the downstream side end portion of the baffle boards 10 and passed through the slits 9. However, since the fluid is proceeded straight towards the slits from the nearby area of the downstream side end portion of the baffle boards unable to make a curve because the particles are larger in specific gravity than gas and have some small diameter, they hit the reflecting planes 14 of the baffle boards 14 and reflected in the centrifugal direction. Accordingly, the reflected particles are precipitated again along the device wall together with the circulating current 13 both inside and outside the device and deposited in the conical portion 3 through the gap 15 between the disc 8 on the lower end portion of the strainer S and the device wall.

In this way, in the cyclone dust collector, the capturing factor is remarkably increased under the effect of the centrifugal force exerted to the particles caused by the baffle boards 10 of the strainer S.

Since the lower end portion of the upper discharge tube is not closed in the conventional cyclone, a tornado phenomenon is generated to the center of the conical portion depending on an amount of wind and velocity of wind coming from the inlet tube. For this reason, it is unavoidable that the fine particles somehow deposited on the bottom portion of the conical portion are raised by the tornado and discharged from the upper discharge tube. However, in the present invention, since the lower end portion of the strainer is closed with the disc 8 and the peripheral edge of the disc is placed proximate to the device wall, a strong tornado phenomenon is prevented from being generated to the center of the conical portion 3. Those particles contained in the circulating fluid current 13f lowering through the gap 15 between the disc 8 and the device wall from inside the cylindrical portion 2 are precipitated in the conical portion 3 due to difference in specific gravity with the fluid. An ascending fluid current 13r is generated towards the disc 8 from the lower portion of the conical portion 3. However, this ascending fluid current is blocked with the disc 8 and prohibited from flowing directly into the strainer S. Such a current attempts to flow in a direction of the strainer S through the gap 15 between the disc 8 and the device wall. However, the particles contained in the ascending fluid current 13 are precipitated again by the descending fluid current 13f flowing towards the conical portion 3 through the gap 15 between the disc 8 and the device wall and deposited on the bottom portion of the conical portion 3. Accordingly, unlike the prior art, the problem of lowering the capturing factor due to the tornado phenomenon is completely obviated.

By the combined effects of the exertion of the centrifugal force by the baffle boards 10 of the strainer and the prevention of a tornado by the disc 8, it becomes possible to capture even such fine particles on the order of 1 to 3 microns when the present invention is applied to a technique for capturing powdered dust generated from a semiconductor manufacturing apparatus, for example. As a result of test using a testing device, the capturing factor was about 97 to 98 % for particles on the order of 1 micron. As a result of application of the present invention to a dust collection of fly ash, even such fine particles on the order of 11 microns could be captured and the capturing factor was 100 %.

Since the strainer S employs the cylindrical member 7, as shown in Fig. 9, a precision filter F capable of capturing particles of 1 micron or less such as a pleats-attached cylindrical paper filter can easily be provided in its cylindrical member 7. In case a strainer having such a precision filter F is used, the capturing factor of the particles of 1 micron is enhanced 100 %.

The strainer S may be attached directly to a lid 5 without a need of a provision of the discharge tube 6, depending on the particle diameter and specific gravity of the objective substance to be captured. If a gap capable of preventing the deposited fine particles from being raised due to the tornado phenomenon at the center of the conical portion is formed between the lower end portion of the strainer and the device wall when the strainer S is attached to the lid 5, the disc 8 for blocking the lower end portion of the strainer S may be larger in diameter than the strainer.

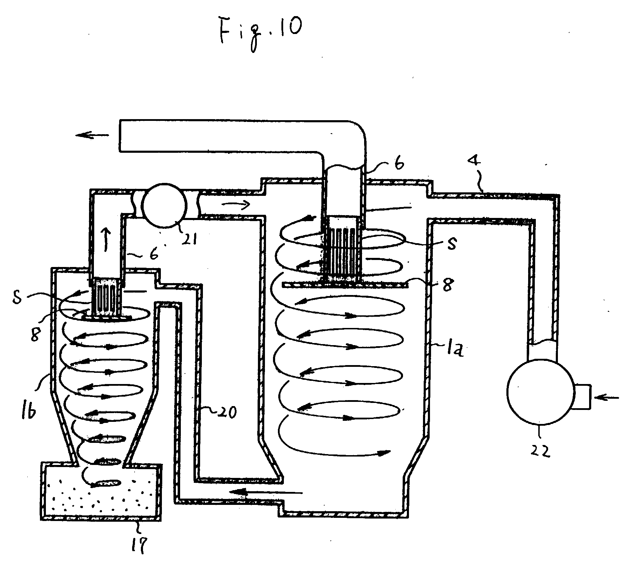

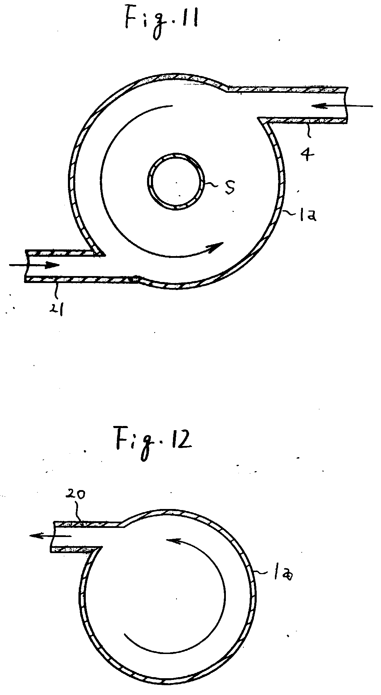

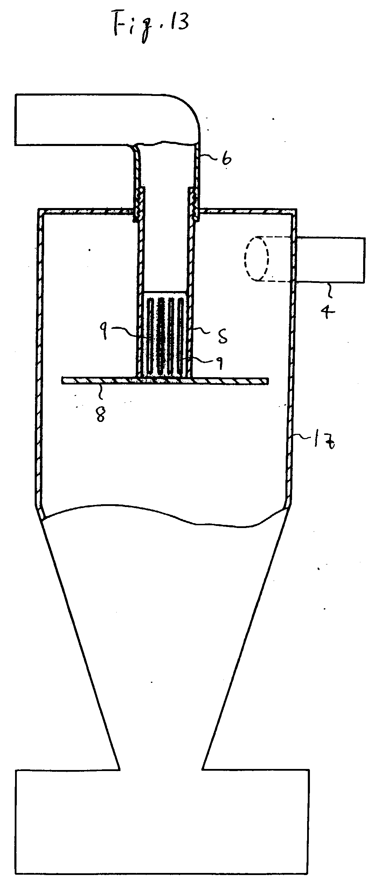

The present invention may have such application as shown in Figs. 10 to 12. Two device bodies 1a,1b having the same construction as the above are employed. A lower portion of the device body 1a of the first cyclone is connected to an upper portion of the device body 1b of the second cyclone through a tube 20. This tube 20 is formed in the tangential direction of the device body 1a of the first cyclone and can be joined to the device body 1b of the second cyclone in the tangential direction. A suction blower 21 is attached to a part of the discharge tube 6 connected to an upper portion of the strainer S in the device body 1b of the second cyclone. The discharge tube 6 is connected to an upper part of the device body 1a of the first cyclone in the tangential direction. That is, according to this construction, the fluid entered into the device body 1a of the first cyclone through the inlet tube 4 by the first blower 22 is subjected to the abovementioned effects and processed again in the device body 1b of the second cyclone and discharged through the discharge tube 6 in the device body 1a of the first cyclone. If particles are found to be contained in the fluid returned again into the device body 1a of the first cyclone from the device body 1b of the second cyclone, the abovementioned procedure is cyclically carried out until a 100 % removal effect can be achieved.

In this embodiment, the slits 9, 9... in the strainer S are formed only in a generally lower half near the disc 8. Owing to this feature, even if the fluid containing large-sized particles should rush therein through the inlet tube 4, etc., they would not hit directly the slit portions.

As apparent from the foregoing, according to the present invention, the particles remained in the circulating fluid current and likely to be discharged through the discharge tube are reflected in the centrifugal direction by the strainer. Accordingly, the capturing effect is enhanced. Since the lower portion of the strainer is closed, the captured particles raised by the tornado phenomenon which sometimes occurs at the conical portion can be prevented from flowing out in an effectively manner. Accordingly, even such fine particles as on the order of 1 to 3 microns can be captured efficiently and the capturing factor is remarkably increased.

In case the diameter of the disc for shielding the lower end portion of the strainer is larger than that of the cylindrical member and a reduced gap is formed between the peripheral edge of the disc and the device wall, even if the captured particles should be raised by the tornado phenomenon occurrable at the center of the conical portion, such raised particles would be precipitated again by the current and particles flowing down the gap. Accordingly, the capturing factor is further enhanced.

In case a precision filter is employed in the strainer, even fine particles of 1 micron or less can be captured efficiently.

In a strainer for a cyclone collector according to the present invention, a lower end portion of the cylindrical member having a plurality of holes in the peripheral wall is shielded with the disc having a larger diameter than the cylindrical member. Accordingly, merely by joining the strainer to the upper lid of the conventional cyclone collector, the capturing factor of the cyclone collector can be increased remarkably.

In case the strainer includes the holes in the peripheral wall and the baffle boards and the baffle boards are each formed in an arcuate configuration in section so as to exhibit a convex surface facing in the predetermined circumferential direction along the peripheral surface and slanted in the centrifugal direction, the particles contained in the fluid current circulating around the nearby area of the peripheral surface of the strainer are reflected in the centrifugal direction by the baffle boards in an efficient manner. Such a strainer can be obtained easily and in an economical manner.

In case the strainer for a cyclone collector has vertical slits formed by equally spacedly cutting out a part of the peripheral wall of the cylindrical member in the circumferential direction and baffle boards formed by twisting the remaining peripheral wall in a predetermined direction about the vertical axis at a predetermined angle, such strainers can be manufactured on a mass production basis and in an economical manner.

It is to be understood that the form of the invention herewith shown and described is to be taken as the preferred embodiment of the same, and that various changes in the shape, size and arrangement of parts may be resorted to without departing from the spirit of the invention or the scope of the subjoined claims.

## Claims

1. A cyclone separator comprising a cylindrical portion of a cyclone and a strainer vertically disposed on an upper center of said cylindrical portion, said strainer being formed by shielding a lower end portion of said cylindrical portion having a through hole formed all the way through a peripheral wall and adapted to disperse particles contained in a fluid flowing towards said hole of said strainer among circulating fluid currents generated at said cylindrical portion in a centrifugal direction.

2. A cyclone separator according to claim 1, wherein said lower end portion of said strainer is shielded with a disc, and a diameter of said disc is formed larger than said cylindrical member so that a gap is formed between a peripheral edge of said disc and an inner wall of said cylindrical portion.

3. A cyclone separator according to claim 1 or 2, further comprising a precision filter disposed within said strainer and adapted to capture particles of 1 micron or less.

4. A cyclone separator according to claim 1 or 2, wherein a lower end of a first cyclone is connected to an upper part of a second cyclone through a tube, and an upper discharge tube connected to a strainer of said second cyclone is connected to an upper part of said first cyclone.

5. A strainer for a cyclone separator, wherein a lower end portion of a cylindrical member having a plurality of through holes formed in a peripheral surface is shielded by a disc having a larger diameter than said cylindrical member.

6. A strainer for a cyclone separator, wherein a lower end portion of a cylindrical member having vertical slits and baffle boards alternately arranged on a peripheral surface in a circumferential direction is shielded by a disc having a larger diameter than said cylindrical member and said baffle boards are each formed in such an arcuate shape in section that it exhibits a convex surface in a predetermined circumferential direction along a peripheral surface and slanted in a centrifugal direction.

7. A strainer for a cyclone separator according to claim 5 or 6, wherein a part of a peripheral wall of said cylindrical member is equally spacedly cut out in a circumferential direction to form said vertical slits and the remaining peripheral wall is twisted by a predetermined angle in a predetermined direction about a vertical axis to form said baffle boards.

8. A strainer for a cyclone separator according to claim 5, 6 or 7, wherein said through hole is formed in a generally lower half of said peripheral surface.
